# FASCICULE DE BREVET EUROPEEN

(11) **EP 0 887 382 B1**
(45) Date de publication et mention de la délivrance du brevet: **03.03.2004**
(21) Numéro de dépôt: 98401528.9
(22) Date de dépôt: 22.06.1998
(51) Int. Cl.: C08L 27/06, C08K 7/22, C08K 9/10, C08J 9/32, C08J 5/18

(54) **Formulations pour l'obtention directe de feuilles expansées, calandrées ou laminées, procédé de fabrication de ces feuilles à l'aide de ces formulations et les feuilles correspondantes obtenues**
Zusammensetzungen zum direkten Erhalten von expandierten, kalandrierten oder laminierten Folien, Verfahren zur Herstellung von diesen Folien und daraus hergestellte Folien
Compositions for the direct obtention of expanded, calandered or laminated sheets, process for their preparation and sheets obtained thereof

(30) Priorité: 26.06.1997 FR 9708008
(43) Date de publication de la demande: 30.12.1998
(73) Titulaire: Atofina, 92800 Puteaux (FR)
(72) Inventeur: Brioude, Michel, 69000 Lyon (FR); Quinson, Renaud, 69001 Lyon (FR)
(74) Mandataire: Chaillot, Geneviève

(56) Documents cités:
- EP-A- 0 304 550
- EP-A- 0 711 815
- WO-A-94/22967
- GB-A- 1 162 069
- GB-A- 2 033 395

## Description

La présente invention porte sur des formulations pour l'obtention directe de feuilles expansées, calandrées ou laminées, souples ou rigides, thermoformables, recyclables, décorables ; sur un procédé de calandrage ou de laminage permettant de fabriquer ces feuilles ; ainsi que sur les feuilles correspondantes ainsi obtenues.

Les domaines d'utilisation visés pour ces feuilles sont en particulier les suivants : papeterie (couvertures de cahiers, de livres, intercalaires) ; revêtement mural où l'on recherche les qualités d'aspect, de toucher et d'imprimabilité ; publicité ; décoration ; jouets ; emballage où l'on recherche un effet anti-choc ; automobile.

Traditionnellement, les feuilles de ce type sont à base de poly(chlorure de vinyle).

La fabrication actuelle des feuilles expansées, calandrées ou laminées, en PVC, nécessite un procédé en deux étapes après la gélification, laquelle est réalisée en mélangeur interne et/ou en extrudeuse/filtreuse. Ces deux étapes sont le calandrage proprement dit, suivi de l'expansion :
· Le calandrage est réalisé à partir d'un mélange traditionnel de PVC avec les additifs usuels, tels que stabilisants, lubrifiants, pigments, et éventuellement plastifiants, ledit mélange contenant en outre un agent d'expansion. Les agents d'expansion généralement utilisés sont des dérivés nitroso, tels que la N,N'-dinitrosopentaméthylènetétramine ou le N,N'-diméthyl-N,N'-dinitrosotéréphtalamide ; des composés azo, tels que l'azodicarbonamide, l'azobisisobutyronitrile ou l'azodicarboxylate de baryum ; ou d'autres composés, comme le bicarbonate de sodium ou l'hydrazide de benzène ou toluène sulfonyle. La mise en oeuvre de ce mélange sur la ligne de calandrage ou de laminage est effectuée comme pour un produit compact, à une température inférieure à celle de la dégradation de l'agent d'expansion.
· Pour réaliser l'expansion, la feuille calandrée, compacte, contenant l'agent d'expansion intact, est ensuite introduite dans un four, généralement constitué d'un tunnel chauffé à une température convenable, situé en prolongement de la ligne de calandrage. Au cours du transit de la feuille dans le tunnel, l'agent d'expansion produit son effet, pour obtenir, à la sortie du tunnel, une feuille expansée.

Ce procédé classique présente plusieurs inconvénients :
- tout d'abord, il nécessite deux étapes de fabrication ;
- pour conduire la deuxième étape, il est nécessaire d'investir dans un tunnel d'expansion ;
- des conditions strictes de calandrage doivent être appliquées pour ne pas dégrader prématurément l'agent d'expansion ; les cellules de gaz formées avant le passage sur le dernier cylindre se détruisent en forte proportion au cours des cisaillements entre cylindres ;
- pour obtenir une expansion correcte, les réglages de la température du tunnel d'expansion et de la vitesse de circulation dans ce tunnel sont délicats ;
- des problèmes se posent pour le recyclage du matériau : les chutes de fabrication, de thermoformage et les produits en fin de vie sont généralement recyclés par calandrage. Les feuilles obtenues avec des agents d'expansion de type azodicarbonamide présentent un inconvénient majeur : les cellules existantes sont en partie détruites au cours d'une deuxième mise en oeuvre, tandis que l'agent d'expansion qui n'est pratiquement jamais totalement détruit au cours de la première mise en oeuvre continue à former des cellules au cours du recyclage. Il est donc très difficile d'obtenir soit un produit compact, soit un produit régulièrement expansé au cours du recyclage.

GB-2 033 395 décrit l'application sur un substrat, par exemple du papier, d'une composition de polymère thermoplastique moussable contenant un agent d'expansion décomposable par la chaleur. Avant ou simultanément à l'application de la composition moussable, une composition contenant des microsphères thermoplastiques expansibles contenant un liquide volatilisable est appliquée sur le substrat. Le produit laminaire est ensuite chauffé pour effectuer la décomposition de l'agent d'expansion avec un moussage et une volatilisation du liquide dans les microsphères.

La Société déposante a maintenant découvert qu'en utilisant un agent d'expansion spécifique, constitué par des microsphères polymériques contenant un liquide ou un gaz dilatable, en assurant la liaison de ces microsphères à la matrice pour la mise en oeuvre sur une ligne de calandrage ou de laminage, et en réglant la fluidité de cette matrice pour permettre aux microsphères d'être simplement transportées lors du calandrage ou du laminage sans subir de cisaillements violents au passage entre les cylindres, une solution pouvait du même coup être apportée à l'ensemble des problèmes posés. Conformément à cette solution efficace et originale, on amène l'expansion à se réaliser soit avant le calandrage ou le laminage, c'est-à-dire par exemple à la sortie d'une extrudeuse de gélification/filtration, soit au cours du calandrage ou du laminage, les cellules assurant l'expansion n'étant alors pas détruites par le cisaillement entre cylindres, compte tenu du fait indiqué ci-dessus, à savoir que le milieu fluide permet un simple transport des microsphères, sans cisaillements de celles-ci.

Il en résulte qu'il n'est pas nécessaire de disposer d'un tunnel d' expansion, que les conditions de mise en oeuvre sont peu sévères, et que le recyclage est possible en un nouveau produit expansé aux caractéristiques voisines de celles du produit initial.

Par ailleurs, conformément à la présente invention et comme indiqué ci-après, le polymère de matrice n'est pas limité au PVC.

La présente invention a donc d'abord pour objet un procédé d'obtention directe d'une feuille expansée, calandrée ou laminée, caractérisé par le fait que :
(1) dans au moins un polymère de matrice (A) choisi parmi les polychlorures de vinyle (PVC) obtenus par polymérisation en masse ou en suspension, ayant une valeur de K allant de 50 à 90 et, de préférence, comprise entre 57 et 65, et les PVC chlorés ayant un indice de viscosité, mesuré selon la norme ISO/R 174 (NFT 51-013) allant de 60 à 200 cm³/g, on introduit au moins un agent d'expansion (B) constitué par des microsphères polymériques contenant un liquide ou un gaz dilatable, le ou les agents d'expansion (B) étant introduits dans des conditions d'agitation douces choisies pour ne pas les dégrader ;
(2) on introduit le mélange dans un dispositif destiné à en assurer la gélification, et on effectue cette gélification à une température comprise entre 110 et 200°C, notamment entre 160 et 190°C, dans des conditions ne détériorant pas le ou les agents d' expansion (B) ;
(3) on adresse le mélange gélifié à un dispositif de calandrage ou de laminage, et on conduit ce calandrage ou ce laminage à des températures de cylindres de 160°C à 190°C, étant avantageusement proches de celles auxquelles on a effectué la gélification,
les conditions de cisaillement, de température et de débit du mélange le long de la ligne de gélification et de calandrage ou laminage étant réglées pour que l'expansion ait lieu en amont du dispositif de calandrage ou de laminage et/ou directement sur ledit dispositif de calandrage ou de laminage et pour que la fluidité du mélange mis en jeu soit telle que le ou les agents d'expansion (B) soient simplement transportés, sans subir, lors. du passage entre les cylindres, des cisaillements qui provoqueraient une destruction des cellules assurant l'expansion de la feuille ; et
(4) on refroidit la feuille obtenue et on la conditionne, les chutes de fabrication ou d'un thermoformage ultérieur pouvant être recyclées à l'étape de gélification.

Par valeur de K, on désigne présentement une mesure de poids moléculaire, dérivée de la viscosité relative au moyen de l'équation de FIKENTSCHER et déterminée selon la norme DIN 53726.

L'agent d'expansion (B) contient un liquide ou un gaz dilatable à une température de 80°C à 220°C et, de préférence, comprise entre 170°C et 190°C, permettant le ramollissement du polymère d'enveloppe et donc l'augmentation du diamètre de la microsphère.

Les microsphères constituant l'agent d'expansion (B) sont avantageusement des microsphères en polymère thermoplastique, tel que les polymères acryliques, remplies d'isopentane. Lorsqu'elles sont chauffées à une température allant de 80 à 220°C, leur diamètre initial allant de 9 à 17 µm augmente par ramollissement du polymère et dilatation de l'isopentane, et peut atteindre une valeur allant de 40 à 60 µm. Ces microsphères sont en particulier celles commercialisées sous la dénomination EXPANCEL par les Ets B. ROSSOW et Cie.

Le ou les agents d'expansion (B) sont avantageusement utilisés à raison de 0,5 à 30 parties en poids, notamment de 3 à 15 parties en poids, pour 100 parties en poids du ou des polymères de matrice (A).

La formulation selon l'invention peut comprendre en outre jusqu'à 15 parties en poids, notamment de 0,5 à 6 parties en poids, pour 100 parties en poids du ou des polymères de matrice (A), d'au moins un stabilisant (C) choisi notamment parmi les stabilisants calcium/zinc, le thioglycolate d'étain et les stabilisants baryum/zinc. Les stabilisants calcium/zinc sont préférés dans le cas où les feuilles seront utilisées dans des applications alimentaires.

La formulation selon l'invention peut comprendre en outre au moins un additif ou adjuvant supplémentaire choisi parmi les lubrifiants (D) et les pigments (E).

A titre de lubrifiants (D) utilisables selon la présente invention, on citera le monooléate de glycérol et les cires de polyéthylène oxydées ou non oxydées. Ces lubrifiants sont utilisés à raison de 0,1 à 3 parties en poids, pour 100 parties en poids du ou des polymères de matrice (A).

A titre d'illustration de pigments (E) utilisables selon la présente invention, on citera le dioxyde de titane, le pigment rouge cromo BRN de CIBA, le pigment bleu GLSM, le jaune irgalithe BRM, l'orange thiosol GL. Ces pigments sont utilisés à raison de 0,0001 à 5 parties en poids, pour 100 parties en poids du ou des polymères de matrice (A).

Selon la présente invention, la formulation peut comprendre en outre au moins un agent de mise en oeuvre (F), utilisé dans une quantité pouvant aller jusqu'à 100 parties en poids, pour 100 parties en poids du ou des polymères de matrice (A). Ce ou ces agents de mise en oeuvre sont notamment choisis parmi les PVC, les PVC chlorés, les copolymères éthylène-acétate de vinyle, les polyéthylènes chlorés, les ABS, les polymères acryliques, les copolymères chlorure de vinyle-acétate de vinyle.

Selon la présente invention, on peut utiliser des polymères de matrice (A) et des agents de mise en oeuvre (F) de même nature, tels que les PVC ou les PVC chlorés. Dans cette éventualité, les valeurs de K ou les indices de viscosité des PVC ou des PVC chlorés utilisés comme agents de mise en oeuvre (F) seront différents des valeurs de K ou des indices de viscosité des PVC ou des PVC chlorés utilisés comme matrice (A).

Dans le cas où l'on souhaite obtenir des feuilles souples, la formulation selon l'invention comprend en outre jusqu'à 150 parties en poids, notamment de 10 à 50 parties en poids, pour 100 parties en poids de (A), d'au moins un plastifiant (G).

Ce ou ces plastifiants (G) sont avantageusement choisis parmi les esters des acides ou anhydrides phtalique, adipique, sébacique, azélaïque, citrique, trimellitique et phosphorique, tels que le phtalate de di-2-éthylhexyle, le phtalate de diisooctyle, le phtalate de diisodécyle, le phtalate de n-octyle et de n-décyle, le phtalate de butylbenzyle, le phtalate de dihexyle, le phtalate de butyloctyle, le phtalate de dicapryle, l'isophtalate de di-2-éthylhexyle ; l'adipate de di-2-éthylhexyle, l'adipate de n-octyle et de n-décyle, l'adipate de diisodécyle, l'azélate de di-2-éthylhexyle, le trimellitate de tri-2-éthylhexyle, le trimellitate de tri-n-octyle, le trimellitate de n-octyle et de n-décyle.

La présente invention a également pour objet un procédé de fabrication d'une feuille à partir d'une formulation telle que définie ci-dessus, caractérisé par le fait que :
(la) dans le cas d'une formulation sans plastifiant (G), on réalise un mélange homogène des différents ingrédients, le ou les agents d'expansion (B) étant introduits ensuite dans des conditions d'agitation douces choisies pour ne pas les dégrader ;
(1b) dans le cas d'une formulation qui contient du PVC et au moins un plastifiant (G), on fait absorber le ou les plastifiants (G) par le ou les polymères de matrice (A) en portant le mélange des deux avec le ou les stabilisants (C) éventuels à une température de 80 à 100°C dans un mélangeur lent ou rapide, et après refroidissement à 40°C-60°C, on incorpore sous faible agitation l'agent de mise en oeuvre (F) et le ou les agents d'expansion (B) - les autres additifs étant introduits au début du mélange - et on homogénéise pendant une durée de 1 à 30 min., notamment de 3 à 10 min. ; le non-respect de ce mode opératoire peut provoquer la formation de gros blocs compacts impossibles à mettre en oeuvre ;
puis on conduit les étapes (2) à (4) comme décrit ci-dessus.

On effectue avantageusement la gélification dans une extrudeuse-filtreuse ou dans un mélangeur ouvert de type bi-cylindre en amont de la calandre ou du dispositif de laminage. L'introduction du mélange dans un mélangeur interne où la friction pourrait provoquer une expansion précoce, difficile à maîtriser, est à déconseiller.

Au cours du procédé, on assure une liaison du ou des agents d'expansion (B) au(x) polymère(s) de matrice (A) en utilisant une température de mise en oeuvre élevée pour les formulations à faible taux de plastifiant ou bien en utilisant un taux de plastifiant élevé et/ou en utilisant un ou des agents de mise en oeuvre (F).

Avantageusement, on règle les paramètres du procédé pour que l'expansion ait lieu en amont de la calandre, par exemple sur le mélangeur ouvert et/ou à la sortie de l'extrudeuse-filtreuse, ce qui permet une plage de travail plus étendue.

La présente invention porte également sur des feuilles expansées, calandrées ou laminées obtenues par un procédé tel que défini ci-dessus.

Les Exemples qui suivent illustrent l'invention.

Les constituants ci-après sont utilisés pour préparer les formulations :
- PVC utilisé comme matrice (A) commercialisé par la Société ELF ATOCHEM S.A. sous la dénomination "LACOVYL RB 8010", ayant une valeur de K égale à 57 et un indice de viscosité égal à 80 cm³/g, ci-après désigné par "PVC"
- PVC chloré à 67% en poids de chlore, utilisé comme agent de mise en oeuvre (F), commercialisé par la Société ELF ATOCHEM S.A. sous la dénomination "LUCALOR RB 8067", ayant un indice de viscosité égal à 72 cm³/g, ci-après désigné par "PVCC"
- Trimellitate de tri-n-octyle utilisé comme plastifiant, ci-après désigné par "TTO"
- Stabilisant calcium/zinc commercialisé par la Société CECA sous la dénomination "STAVINOR CZ 11F", ci-après désigné par "stabilisant Ca/Zn"
- Sphères creuses de polymère acrylique remplies d'isopentane, commercialisées par les Ets ROSSOW et Cie sous la dénomination "EXPANCEL 092 DU 120", ci-après désignées par "EXPANCEL"

### Préparation des formulations

### (1) Mélange

Dans un turbo-mélangeur rapide PLASMEC constitué d'une cuve haute de 600 litres et d'une cuve basse de 2500 litres, on introduit dans la cuve haute de mélange :
- 100 parties en poids de PVC ; et
- 5 parties en poids de stabilisant Ca/Zn.

On agite à grande vitesse (350 tours par minute) jusqu'à ce que la température atteigne par friction 60°C.

Ensuite, on introduit, sous agitation :
- 50 parties en poids de TTO préchauffé à 60°C.

On vidange ensuite le contenu de la cuve haute dans la cuve basse lorsque la température a atteint 100°C. Dans ces conditions, le plastifiant TTO a été absorbé par le PVC.

On refroidit le contenu de la cuve basse à 60°C sous agitation lente (80 tours/mn), puis on ajoute :
- 100 parties en poids de PVCC ; et
- x parties en poids d'EXPANCEL
dans ladite cuve basse.

Après 3 minutes d'agitation du mélange ainsi obtenu, on vidange le contenu de la cuve basse.

### (2) Gélification

Le mélange obtenu en (1) est introduit dans la trémie d'alimentation d'une extrudeuse AUDOUART, équipée d'une vis 40 x 20 D ayant un taux de compression de 2,4 et d'une filière ayant un diamètre de 30 mm.

Les conditions d'extrusion sont les suivantes :
- températures (de la trémie d'alimentation à la filière) : 130°C, 140°C, 150°C, 160°C, 170°C
- vitesse de la rotation de la vis : 20 tours par minute.

### (3) Calandrage

Le produit extrudé en (2), homogène et expansé (sauf Exemple 1 T - cf tableau ci-après) est alors introduit entre les 2 premiers cylindres d'une calandre OLLIER constituée de 3 cylindres de diamètres égaux à 150 mm.

Les conditions de calandrage sont les suivantes :
- température des cylindres :
   cylindre 1 : 170°C
   cylindre 2 : 170°C
   cylindre 3 : 165°C
- vitesse de rotation de chaque cylindre : 7 tours par minute

On réalise en sortie de calandre un refroidissement sur cylindre de refroidissement (14 à 18°C) de diamètre égal à 250 mm.

On obtient des feuilles d'épaisseur variable, qui dépend de l'écartement entre les cylindres. Dans les exemples, l'écartement entre les cylindres a varié entre 400 µm et 4 mm. Ainsi, par exemple, pour l'Exemple 3, pour un écartement entre les cylindres 1 et 2 et entre les cylindres 2 et 3 de 250 µm, on obtient une feuille de 500 µm (il y a doublement de l'épaisseur en sortie de calandre). Ces feuilles ont des masses volumiques exprimées en g/cm³, telles que reportées dans le tableau ci-après qui reporte les résultats de 10 essais effectués avec des taux x d'EXPANCEL différents.

Dans ce tableau :
- T signifie essai témoin sans EXPANCEL
- x, la quantité d'EXPANCEL, exprimée en parties en poids
- MV, la masse volumique, exprimée en g/cm³.

| Exemple | x (parties en poids) | MV (g/cm³) |
|---|---|---|
| 1T | 0 | 1,2 |
| 2 | 2,5 | 1 |
| 3 | 5 | 0,77 |
| 4 | 7,5 | 0,64 |
| 5 | 10 | 0,53 |
| 6 | 12,5 | 0,42 |
| 7 | 15 | 0,36 |
| 8 | 17,5 | 0,30 |
| 9 | 20 | 0,27 |
| 10 | 22,5 | 0,25 |

## Revendications

1. Procédé d'obtention directe d'une feuille expansée, calandrée ou laminée, **caractérisé par le fait que** :
(1) dans au moins un polymère de matrice (A) choisi parmi les polychlorures de vinyle (PVC) obtenus par polymérisation en masse ou en suspension, ayant une valeur de K allant de 50 à 90, et les PVC chlorés ayant un indice de viscosité, mesuré selon la norme ISO R 174 (NFT 51-013) allant de 60 à 200 cm³/g, on introduit au moins un agent d'expansion (B) constitué par des microsphères polymériques contenant un liquide ou un gaz dilatable, le ou les agents d'expansion (B) étant introduits dans des conditions d'agitation douces choisies pour ne pas les dégrader ;
(2) on introduit le mélange dans un dispositif destiné à en assurer la gélification, et on effectue cette gélification à une température comprise entre 110 et 200°C, dans des conditions ne détériorant pas le ou les agents d'expansion (B) ;
(3) on adresse le mélange gélifié à un dispositif de calandrage ou de laminage, et on conduit ce calandrage ou ce laminage à des températures de cylindres de 160°C à 190°C,
les conditions de cisaillement, de température et de débit du mélange le long de la ligne de gélification ou de calandrage ou laminage étant réglées pour que l'expansion ait lieu en amont du dispositif de calandrage ou de laminage et/ou directement sur ledit dispositif de calandrage ou de laminage et pour que la fluidité du mélange mis en jeu soit telle que le ou les agents d'expansion (B) soient simplement transportés, sans subir, lors du passage entre les cylindres, des cisaillements qui provoqueraient une destruction des cellules assurant l'expansion de la feuille ; et
(4) on refroidit la feuille obtenue et on la conditionne, les chutes de fabrication ou d'un thermoformage ultérieur pouvant être recyclées à l'étape de gélification.

2. Procédé selon la revendication 1, **caractérisé par le fait que** l'on utilise comme polymère de matrice (A) un PVC ayant une valeur de K allant de 57 à 65.

3. Procédé selon l'une des revendications 1 et 2, **caractérisé par le fait que** l'on utilise comme microsphères constituant l'agent d'expansion (B) des microsphères en polymère thermoplastique, remplies d'isopentane.

4. Procédé selon la revendication 3, **caractérisé par le fait que** l'on utilise un polymère acrylique comme polymère thermoplastique constituant l'enveloppe des microsphères.

5. Procédé selon l'une des revendications 3 et 4, **caractérisé par le fait que** l'on utilise des microsphères qui ont un diamètre initial de 9 à 17 µm, lequel peut augmenter, sous l'effet d'un chauffage à 80-220°C, jusqu'à une valeur de 40-60 µm.

6. Procédé selon l'une des revendications 1 à 5, **caractérisé par le. fait que** l'on utilise le ou les agents d'expansion (B) à raison de 0,5 à 30 parties en poids, notamment de 3 à 15 parties en poids, pour 100 parties en poids du ou des polymères de matrice (A).

7. Procédé selon l'une des revendications 1 à 6, **caractérisé par** le fait l'on utilise un ou des polymères de matrice (A) auquel on a mélangé de façon homogène :
- jusqu'à 15 parties en poids d'au moins un stabilisant (C) pour 100 parties en poids du ou des polymères de matrice (A) ; et /ou
- au moins un lubrifiant (D) utilisé notamment à raison de 0,1 à 3 parties en poids pour 100 parties en poids du ou des polymères de matrice (A) ; et/ou
- au moins un pigment (E) utilisé notamment à raison de 0,0001 à 5 partie en poids, pour 100 parties en poids du ou des polymères de matrice (A) ; et/ou ;
- au moins un agent de mise en oeuvre (F), utilisé dans une quantité pouvant aller jusqu'à 100 parties par rapport à 100 parties en poids du ou des polymères de matrice (A).

8. Procédé selon la revendication 7, **caractérisé par le fait que** le ou les stabilisants (C) sont utilisés à raison de 0,5 à 6 parties pour 100 parties en poids du ou des polymères de matrice (A).

9. Procédé selon l'une des revendications 7 et 8, **caractérisé par le fait que** le ou les stabilisants (C) sont choisies parmi les stabilisants calcium/zinc, le thioglycolate d'étain et les stabilisants baryum/zinc.

10. Procédé selon l'une des revendications 7 à 9, **caractérisé par le fait que** le ou les lubrifiants (D) sont choisis parmi le monooléate de glycérol et les cires de polyéthylène oxydées ou non oxydées.

11. Procédé selon l'une des revendications 7 à 10, **caractérisé par le fait que** le ou les pigments (E) sont choisis parmi le dioxyde de titane, le pigment rouge cromo BRN, le pigment bleu GLSM, le jaune irgalithe BRM et l'orange thiosol GL.

12. Procédé selon l'une des revendications 7 à 11, **caractérisé par le fait que** l'agent de mise en oeuvre (F) est choisi parmi les PVC, les PVC chlorés, les copolymères éthylène-acétate de vinyle, les polyéthylènes chlorés, les ABS, les polymères acryliques et les copolymères chlorure de vinyle-acétate de vinyle, et que, dans le cas où les polymères de matrice (A) et les agents de mise en oeuvre (F) sont de même nature, tels que les PVC ou les PVC chlorés, les valeurs de K ou les indices de viscosité des PVC ou des PVC chlorés utilisés comme agents de mise en oeuvre (F) sont différents des valeurs de K ou des indices de viscosité des PVC ou des PVC chlorés utilisés comme matrice (A).

13. Procédé selon l'une des revendications 1 à 12, **caractérisé par le fait que** la formulation comprend en outre jusqu'à 150 parties en poids, notamment de 10 à 50 parties en poids, pour 100 parties en poids de (A), d'au moins un plastifiant (G) et que pour l'étape (1), on fait absorber le ou les plastifiants (G) par le ou les polymères de matrice (A) en portant le mélange des deux avec un ou des stabilisants (C) éventuels à une température de 80 à 100°C dans un mélangeur lent ou rapide, et après refroidissement à 40°C-60°C, on incorpore sous faible agitation le ou les agents de mise en oeuvre (F) éventuellement présents et le ou les agents d'expansion (B) - les lubrifiants (D) et les pigments (E) éventuellement présents étant introduits au début du mélange - et on homogénéise pendant une durée de 1 à 30 min., notamment de 3 à 10 min., les stabilisants (C) étant tels que définis à l'une des revendications 7 à 9, les lubrifiants (D) étant tels que définis à l'une des revendications 7 et 10, et les pigments (E) étant tels que définis à l'une des revendications 7 et 11.

14. Procédé selon la revendication 13, **caractérisé par le fait que** le ou les plastifiants (G) sont choisis parmi les esters des acides ou anhydrides phtalique, adipique, sébacique, azélaïque, citrique, trimellitique et phosphorique, tels que le phtalate de di-2-éthylhexyle, le phtalate de diisooctyle, le phtalate de diisodécyle, le phtalate de n-octyle et de n-décyle, le phtalate de butylbenzyle, le phtalate de dihexyle, le phtalate de butyloctyle, le phtalate de dicapryle, l'isophtalate de di-2-éthylhexyle, l'adipate de di-2-éthylhexyle, l'adipate de n-octyle et de n-décyle, l'adipate de diisodécyle, l'azélate de di-2-éthylhexyle, le trimellitate de tri-2-éthylhexyle, le trimellitate de tri-n-octyle, le trimellitate de n-octyle et de n-décyle.

15. Procédé selon l'une des revendications 1 à 14, **caractérisé par le fait que** l'on effectue là gélification à une température comprise entre 160 et 190°C.

16. Procédé selon l'une des revendications 1 à 15, **caractérisé par le fait qu'**on effectue la gélification dans une extrudeuse-filtreuse ou dans un mélangeur ouvert de type bi-cylindre.

17. Procédé selon l'une des revendications 1 à 16, **caractérisé par le fait que** l'on conduit le calandrage ou le laminage à des températures de cylindres proches de celles auxquelles on a effectué la gélification.

18. Procédé selon l'une des revendications 1 à 17, **caractérisé par le fait qu'**on assure une liaison du ou des agents d'expansion (B) au(x) polymère(s) de matrice (A) en utilisant une température de mise en oeuvre élevée pour les formulations à faible taux de plastifiant (G) ou bien en utilisant un taux de plastifiant (G) élevé et/ou en utilisant un ou des agents de mise en oeuvre (F).

## Claims

1. Process for the direct production of an expanded, calendered or laminated sheet **characterized by** the fact that :
(1) in at least one matrix polymer (A) chosen from the poly(vinyl chloride)s (PVCs) obtained by bulk or suspension polymerization, having a K value ranging from 50 to 90, and chlorinated PVCs having a viscosity index, measured according to ISO R Standard 174 (NFT 51-013), ranging from 60 to 200 cm³/g, at least one expansion agent (B) composed of polymeric microspheres containing a dilatable liquid or gas is introduced under mild stirring conditions chosen in order not to decompose them ;
(2) the mixture is introduced into a device intended to provide for the gelling thereof and this gelling is carried out at a temperature of between 110 and 200°C, under conditions which do not cause deterioration of the expansion agent of agents (B);
(3) the gelled mixture is sent to a calendering or laminating device and this calendering or this laminating is carried out at roller temperatures of 160°C to 190°C,
the conditions of shearing, of temperature and of throughput of the mixture along the gelling or calendering or laminating line being adjusted so that the expansion takes place upstream of the calendering or laminating device and/or directly on the said calendering or laminating device and so that the fluidity of the mixture involved is such that the expansion agent or agents (B) are simply transported, without being subjected, while passing between the rollers, to shearing which would destroy the cells providing for the expansion of the sheet ; and
(4) the sheet obtained is cooled and conditioned, it being possible for the manufacturing offcuts or offcuts from a subsequent thermoforming to be recycled in the gelling stage.

2. Process according to Claim 1, **characterized in that** a PVC having a K value ranging from 57 to 65 is used as the matrix polymer (A).

3. Process according to either of Claims 1 and 2, **characterized in that** microspheres made of thermoplastic polymer which are filled with isopentane are used as microspheres constituting the expansion agent (B).

4. Process according to Claim 3, **characterized in that** an acrylic polymer is used as the thermoplastic polymer constituting the outer covering of the microspheres.

5. Process according to either of Claims 3 and 4, **characterized in that** are used microspheres having an initial diameter of 9 to 17 µm, which can increase, under the effect of heating at 80-220°C, to a value of 40-60 µm.

6. Process according to one of Claims 1 to 5, **characterized in that** the expansion agent or agents (B) are used in the proportion of 0.5 to 30 parts by weight, in particular of 3 to 15 parts by weight, per 100 parts by weight of the matrix polymer or polymers (A).

7. Process according to one of Claims 1 to 6, **characterized in that** are used polymer or polymers (A) to which has been mixed homogeneously :
- up to 15 parts by weight of at least one stabilizer (C) per 100 parts by weight of the matrix polymer or polymers (A) ;
- at least a lubricant (D) used in particular in the proportion of 0.1 to 3 parts by weight per 100 parts by weight of the matrix polymer or polymers (A) ; and/or
- at least a pigment (E) used in particular in the proportion of 0.0001 to 5 parts by weight per 100 parts by weight of the matrix polymer or polymers (A); and/or
- at least one processing aid (F), used in amount which can range up to 100 parts by weight with respect to 100 parts by weight of the matrix polymer or polymers (A).

8. Process according to Claim 7, **characterized in that** the stabilizer or stabilizers (C) are from 0.5 to 6 parts per 100 parts by weight of the matrix polymer or polymers (A).

9. Process according to either of Claims 7 and 8, **characterized in that** the stabilizer or stabilizers (C) are chosen from calcium/zinc stabilizers, tin thioglycolate and barium/zinc stabilizers.

10. Process according to anyone of Claims 7 to 9, **characterized in that** the lubricant or lubricants (D) are chosen from glyceryl monooleate and oxidized or non-oxidized polyethylene waxes.

11. Process according to one of Claims 7 to 10, **characterized in that** the pigment or pigments (E) are chosen from titanium dioxide, Pigment Red Cromo BRN, Pigment Blue GLSM, Yellow Irgalith BRM and Orange Thiosol GL.

12. Process according to one of Claims 7 to 11, **characterized in that** the processing aid (F) is chosen from PVCs, chlorinated PVCs, ethylene/vinyl acetate copolymers, chlorinated polyethylenes, ABSs, acrylic polymers and vinyl chloride/vinyl acetate copolymers and that, in the case where the matrix polymers (A) and the processing aids (F) are of the same nature, such as PVCs or chlorinated PVCs, the K values or the viscosity indices of the PVCs or of the chlorinated PVCs used as processing aids (F) are different from the K values or the viscosity indices of the PVCs or of the chlorinated PVCs used as matrix (A).

13. Process according to one of Claims 1 to 12, **characterized in that** the formulation additionally comprises up to 150 parts by weight, in particular from 10 to 50 parts by weight, per 100 parts by weight of (A) of at least one plasticizer (G), and that for step (1), the plasticizer or plasticizers (G) are absorbed by the matrix polymer or polymers (A) by bringing the mixture of the two, with the optional stabilizer or stabilizers (C), to a temperature of 80 to 100°C in slow or rapid mixer and, after cooling to 40°C-60°C, the optional processing aid or aids (F) and the expansion agent or agents (B) are incorporated with gentle stirring, the optional lubricants (D) and pigments (E) being introduced at the beginning of the mixing, and homogenisation is carried out for a period of 1 to 30 min, in particular 3 to 10 min, the stabilizers (C) being as defined in anyone of claims 7 to 9, the lubricants (D) being as defined in anyone of claims 7 and 10, and the pigments (E) being as defined in anyone of claims 7 and 11.

14. Process according to Claim 13, **characterized in that** the plasticizer or plasticizers (G) are chosen from esters of phthalic, adipic, sebacic, azelaic, citric, trimellitic and phosphoric acids or anhydrides, such as di-2-ethylhexyl phthalate, diisooctyl phthalate, diisodecyl phthalate, n-octyl n-decyl phthalate, butyl benzyl phthalate, dihexyl phthalate, butyl octyl phthalate, dicapryl phthalate, di-2-ethylhexyl isophthalate, di-2-ethylhexyl adipate, n-octyl n-decyl adipate, diisodecyl adipate, di-2-ethylhexyl azelate, tri-2-ethylhexyl trimellitate, tri-n-octyl trimellitate or n-octyl n-decyl trimellitate.

15. Process according to one of Claims 1 to 14, **characterized by** the fact that gelling is carried out at a temperature between 160 and 190°C.

16. Process according to one of Claims 1 to 15, **characterized in that** the gelling is carried out in a filter-type extruder or in an open mixer of twin roller type.

17. Process according to one of Claims 1 to 16, **characterized by** the fact that calendering or laminating is carried out at roller temperatures close to those at which gelling has been carried out.

18. Process according to one of Claims 1 to 17, **characterized in that** the bonding of expansion agent or agents (B) to the matrix polymer(s) (A) is provided for by using a high processing temperature for the formulations with a low level of plasticizer (G) or else by using a high level of plasticizer (G) and/or by using a processing aid or aids (F).

## Patentansprüche

1. Verfahren zur direkten Herstellung einer geschäumten, kalandrierten oder gewalzten Folie, **dadurch gekennzeichnet, dass** man:
(1) in mindestens ein Matrix-Polymer (A), ausgewählt aus den Polyvinylchloriden (PVC), die durch Polymerisation in Masse oder in Suspension hergestellt worden sind, die einen K-Wert von 50 bis 90 aufweisen, und den chlorierten PVC, die einen Viskositätsindex, bestimmt nach der Norm ISO R 174 (NFT 51-013), von 60 bis 200 cm³/g aufweisen, mindestens ein Treib- bzw. Blähmittel (B) einführt, das aus Polymer-Mikrokugeln besteht, die eine Flüssigkeit oder ein dehnbares Gas enthalten,
wobei das oder die Treib- bzw. Blähmittel (B) unter milden Rührbedingungen eingeführt werden, um sie nicht zu beschädigen;
(2) die Mischung in eine Vorrichtung einführt, die dazu dient, die Gelbildung zu gewährleisten, und diese Gelbildung bei einer Temperatur zwischen 110 und 200 °C unter Bedingungen durchführt, die das oder die Treib- bzw. Blähmittel (B) nicht beeinträchtigen;
(3) die in ein Gel überführte Mischung in eine Kalandrier- oder Auswalz-Vorrichtung überführt und das Kalandrieren oder Auswalzen bei Zylinder-Temperaturen von 160 bis 190 °C durchführt,
wobei die Scherbedingungen, die Temperaturbedingungen und die Bedingungen in Bezug auf den Durchsatz der Mischung entlang der Leitung zur Gelbildung oder zur Kalandrierung oder Auswalzung so eingestellt werden, dass die Verschäumung stromaufwärts von der Kalandrier- oder Walzvorrichtung und/oder direkt in der Kalandrier- oder Walzvorrichtung stattfindet und das Fließvermögen der eingesetzten Mischung so ist, dass das oder die Treib- bzw. Blähmittel (C) nur transportiert werden, ohne bei dem Durchgang zwischen den Zylindern Scherwirkungen ausgesetzt zu sein, die eine Zerstörung der Zellen hervorrufen könnten, welche die Verschäumung der Folie gewährleisten; und
(4) die erhaltene Folie abkühlt und sie konditioniert, wobei die bei der Produktion oder bei einer späteren Warmverformung entstehenden Abfälle in die Gelbildungsstufe im Kreislauf zurückgeführt werden können.

2. Verfahren nach Anspruch 1, **dadurch gekennzeichnet, dass** man als Matrix-Polymer (A) ein PVC mit einem K-Wert von 57 bis 65 verwendet.

3. Verfahren nach einem der Ansprüche 1 und 2, **dadurch gekennzeichnet, dass** man als Mikrokugeln, die das Treib- bzw. Blähmittel (B) darstellen, Mikrokugeln aus einem thermoplastischen Polymer verwendet, die mit Isopentan gefüllt sind.

4. Verfahren nach Anspruch 3, **dadurch gekennzeichnet, dass** man ein Acrylpolymer als thermoplastisches Polymer verwendet, das die Hülle der Mikrokugeln bildet.

5. Verfahren nach einem der Ansprüche 3 und 4, **dadurch gekennzeichnet, dass** man Mikrokugeln verwendet, die einen anfänglichen Durchmesser von 9 bis 17 µm aufweisen, den man durch Erwärmen auf 80 bis 220 °C bis auf einen Wert von 40 bis 60 µm erhöhen kann.

6. Verfahren nach einem der Ansprüche 1 bis 5, **dadurch gekennzeichnet, dass** man das oder die Treib- bzw. Blähmittel (B) in einer Menge von 0,5 bis 30 Gew.-Teilen, insbesondere von 3 bis 15 Gew.-Teilen, auf 100 Gew.-Teile des oder der Matrix-Polymeren (A) verwendet.

7. Verfahren nach einem der Ansprüche 1 bis 6, **dadurch gekennzeichnet, dass** man ein oder mehrere Matrixpolymere (A) verwendet, dem (denen) man auf homogene Weise zugemischt hat:
- bis zu 15 Gew.-Teilen mindestens eines Stabilisators (C) auf 100 Gew.-Teile des oder der Matrix-Polymeren (A) und/oder
- mindestens ein Schmiermittel (D), das insbesondere in einer Menge von 0,1 bis 3 Gew.-Teilen auf 100 Gew.-Teile des oder der Matrix-Polymeren (A) verwendet wird, und/oder mindestens ein Pigment (E), das insbesondere in einer Menge von 0,0001 bis 5 Gew.-Teilen auf 100 Gew.-Teile des oder der Matrix-Polymeren (A) verwendet wird, und/oder
- mindestens ein Verarbeitungsmittel (F), das in einer Menge verwendet werden kann, die bis zu 100 Gew.-Teile auf 100 Gew.-Teile des oder der Matrix-Polymeren (A) betragen kann.

8. Verfahren nach Anspruch 7, **dadurch gekennzeichnet, dass** der oder die Stabilisatoren (C) in einer Menge von 0,5 bis 6 Gew.-Teilen auf 100 Gew.-Teile des oder der Matrix-Polymeren (A) verwendet wird (werden).

9. Verfahren nach einem der Ansprüche 7 und 8, **dadurch gekennzeichnet, dass** der oder die Stabilisatoren (C) ausgewählt wird (werden) unter den Calcium/Zink-Stabilisatoren, dem Zinnthioglycolat und den Barium/Zink-Stabilisatoren.

10. Verfahren nach einem der Ansprüche 7 bis 9, **dadurch gekennzeichnet, dass** das oder die Schmiermittel (D) ausgewählt wird (werden) unter dem Glycerinmonooleat und den oxidierten oder nicht oxidierten Polyethylenwachsen.

11. Verfahren nach einem der Ansprüche 7 bis 10, **dadurch gekennzeichnet, dass** das oder die Pigmente (E) ausgewählt wird (werden) aus der Gruppe Titandioxid, dem roten Pigment Chromo BRN, dem blauen Pigment GLSM, dem gelben Pigment lrgalite BRM und dem orangefarbenen Pigment Thiosol GL.

12. Verfahren nach einem der Ansprüche 7 bis 11, **dadurch gekennzeichnet, dass** das Verarbeitungsmittel (F) ausgewählt wird aus der Gruppe der PVC, der chlorierten PVC, der Ethylen/Vinylacetat-Copolymeren, der chlorierten Polyethylene, der ABS, der Acrylpolymeren und der Vinylchlorid/Vinylacetat-Copolymeren, und dass für den Fall, dass die Matrix-Polymeren (A) und die Verarbeitungsmittel (F) gleicher Natur sind, wie z.B. die PVC oder die chlorierten PVC, die K-Werte oder die Viskositätsindices der als Verarbeitungsmittel (F) verwendeten PVC oder chlorierten PVC verschieden sind von den K-Werten oder den Viskositätsindices der als Matrix (A) verwendeten PVC oder chlorierten PVC.

13. Verfahren nach einem der Ansprüche 1 bis 12, **dadurch gekennzeichnet, dass** die Formulierung außerdem umfasst bis zu 150 Gew.-Teile, insbesondere 10 bis 50 Gew.-Teile, auf 100 Gew.-Teile (A), mindestens eines Weichmachers (G) und dass man in der Stufe (1) den oder die Weichmacher (G) durch das oder die Matrix-Polymeren (A) absorbieren lässt, indem man die Mischung der beiden mit einem oder mehreren eventuellen Stabilisatoren (C) in einem langsamen oder schnellen Mischer auf eine Temperatur von 80 bis 100 °C bringt und nach dem Abkühlen auf 40 bis 60 °C unter schwachem Rühren das oder die Verarbeitungsmittel (F), die gegebenenfalls vorhanden sind, und das oder die Treib- bzw. Blähmittel (B) einarbeitet - wobei die Schmiermittel (D) und die Pigmente (E), die gegebenenfalls vorhanden sind, zu Beginn in die Mischung eingeführt worden sind - und dass man für eine Dauer von 1 bis 30 min, insbesondere von 3 bis 10 min, homogenisiert, wobei die Stabilisatoren (C) solche sind, wie sie einem der Ansprüche 7 bis 9 definiert sind, die Schmiermittel (D) solche sind, wie sie in einem der Ansprüche 7 und 10 definiert sind, und die Pigmente (E) solche sind, wie sie in einem der Ansprüche 7 und 11 definiert sind.

14. Verfahren nach Anspruch 13, **dadurch gekennzeichnet, dass** man das oder die Weichmacher (G) auswählt aus der Gruppe der Ester der Phthal-, Adipin-, Sebacin, Azelain-, Citronen-, Trimellith- und Phosphorsäuren oder -säureanhydride, wie z.B. Di-2-ethylhexylphthalat, Diisooctylphthalat, Diisodecylphthalat, n-Octyl- und N-Decyl-phthalat, Butylbenzylphthalat, Dihexylphthalat, Butyloctylphthalat, Dicaprylphthalat, Di-2-ethylhexylisophthalat, Di-2-ethylhexyladipat, n-Octyl- und n-Decyladipat, Diisodecyladipat, Di-2-ethylhexylazelat, Tri-2-ethylhexyltrimellithat, Trin-octyltrimellithat, n-Octyl- und n-Decyltrimellithat.

15. Verfahren nach einem der Ansprüche 1 bis 14, **dadurch gekennzeichnet, dass** man die Gelbildung bei einer Temperatur zwischen 160 und 190 °C durchführt.

16. Verfahren nach einem der Ansprüche 1 bis 15, **dadurch gekennzeichnet, dass** man die Gelbildung in einem Filter-Extruder oder in einem offenen Mischer vom 2-Zylinder-Typ durchführt.

17. Verfahren nach einem der Ansprüche 1 bis 16, **dadurch gekennzeichnet, dass** man das Kalandrieren oder Auswalzen bei Zylinder-Temperaturen durchführt, die nahe bei denjenigen liegen, bei denen die Gelbildung durchgeführt worden ist.

18. Verfahren nach einem der Ansprüche 1 bis 17, **dadurch gekennzeichnet, dass** man eine Bindung des oder der Treib- bzw. Blähmittel (B) an das oder die Matrix-Polymer(en) (A) sicherstellt, indem man eine hohe Verarbeitungstemperatur für die Formulierungen mit niedrigem Gehalt an Weichmacher (G) anwendet oder dass man einen hohen Gehalt an Weichmacher (G) verwendet und/oder ein oder mehrere Verarbeitungsmittel (F) verwendet.
